# EUROPÄISCHE PATENTSCHRIFT

(11) **EP 2 944 500 B1**
(45) Veröffentlichungstag und Bekanntmachung des Hinweises auf die Patenterteilung: **26.12.2018**
(21) Anmeldenummer: 15000731.8
(22) Anmeldetag: 12.03.2015
(51) Int. Cl.: B60N 3/00, B60K 37/04

(54) **Anordnung eines Hand-Auflageelements in einem Fahrzeug, insbesondere in einem Nutzfahrzeug**
ASSEMBLY OF A HAND SUPPORT ELEMENT IN A VEHICLE, IN PARTICULAR A COMMERCIAL VEHICLE
AGENCEMENT D'UN ÉLÉMENT DE REPOSE-PAUME DANS UN VÉHICULE, NOTAMMENT DANS UN VÉHICULE UTILITAIRE

(30) Priorität: 14.05.2014 DE 102014007085
(43) Veröffentlichungstag der Anmeldung: 18.11.2015
(73) Patentinhaber: MAN Truck & Bus AG, 80995 München (DE)
(72) Erfinder: Fritz, Maria, 80637 München (DE)
(74) Vertreter: Liebl, Thomas

(56) Entgegenhaltungen:
- DE-A1-102009 008 727
- DE-A1-102010 009 490
- DE-A1-102012 001 137

## Beschreibung

Die Erfindung betrifft eine Anordnung eines Hand-Auflageelements in einem Fahrzeug, insbesondere in einem Nutzfahrzeug, nach dem Oberbegriff des Patentanspruches 1 sowie ein Fahrzeug, insbesondere ein Nutzfahrzeug, nach Patentanspruch 14.

Moderne Fahrzeuge sind regelmäßig mit einem sogenannten Sekundär-Display ausgestattet. Dabei handelt es sich um einen Bildschirm, der ein Bedienmenü zur Bedienung von Fahrzeugfunktionen, beispielsweise eines Infotainment-Systems oder eines Navigationssystems des Fahrzeuges, anzeigt. Ein derartiger Bildschirm kann beispielsweise als Touchscreen ausgebildet sein, wodurch das Bedienmenü durch Touch-Eingaben am Bildschirm selbst bedient werden kann. Alternativ oder zusätzlich kann die Bedienung des Bedienmenüs auch mittels zusätzlicher Bedienelemente, beispielsweise mechanischer Tasten, erfolgen. Das Sekundär-Display und die eventuell zusätzlichen Bedienelemente sind dabei regelmäßig an einer Instrumententafel des Fahrzeuges angeordnet, um einem Fahrer und/oder einem Fahrgast des Fahrzeuges, insbesondere während einer Fahrt mit dem Fahrzeug, die Bedienung des Bedienmenüs zu ermöglichen.

Weiterhin ist es auch bekannt, eine Hand-Auflage im Bereich des Sekundär-Displays bzw. im Bereich der zusätzlichen Bedienelemente derart anzuordnen, dass der Fahrer des Fahrzeuges das an dem Sekundär-Display angezeigte Bedienmenü mit einer an der Hand-Auflage abgestützten Hand bedienen kann. Dadurch wird die Bedienung des Sekundär-Displays, insbesondere während einer Fahrt mit dem Fahrzeug, deutlich vereinfacht.

Aus der DE 10 2010 009 490 A1 ist ein Kraftfahrzeug mit einer einen Touchscreen aufweisenden Instrumententafel bekannt, bei dem der Touchscreen gegenüber einer horizontalen Fahrzeugebene um mindestens 45° geneigt ist. Unterhalb des Touchscreens ist eine Auflage für eine Hand eines Fahrers oder eines Fahrgasts des Kraftfahrzeuges derart angeordnet, dass die Hand beim Bedienen des Touchscreens an der Auflage abstützbar ist. Konkret ist die Auflage hier als U-förmiger Bügel ausgebildet, der mit seinen beiden freien Enden seitlich außen an dem Touchscreen schwenkbar festgelegt ist und dessen U-Basis einen Auflagebereich ausbildet. Die schwenkbare Festlegung des U-förmigen Bügels ermöglicht eine Verlagerung des U-förmigen Bügels von einer Verstaustellung in eine Gebrauchsstellung und umgekehrt.

Weiter offenbart die DE 10 2012 001 137 A1 eine Armaturentafel eines Kraftfahrzeuges mit einer Anzeige- und Bedieneinheit, die einen senkrecht orientierten Touchscreen aufweist. Konkret ist unterhalb des Touchscreens ein Auflageteil angeordnet, das in der Armaturentafel gelagert und aus dieser ausfahrbar sowie in diese einfahrbar ist, um dort eine Hand auflegen zu können. In das Hand-Auflageteil kann ein kapazitiver Näherungsschalter integriert sein, der eine Annäherung einer Hand erfasst und dann das Hand-Auflageteil in die Gebrauchsposition ausfährt. Wird die Hand des Bedieners vom Näherungsschalter wegbewegt, wird das Auflageteil wieder eingefahren.

Aufgabe der Erfindung ist es, eine Anordnung eines Hand-Auflageelements in einem Fahrzeug, insbesondere in einem Nutzfahrzeug, bereitzustellen, mittels der das Hand-Auflageelement auf besonders einfache und/oder variable Weise an dem Fahrzeug angeordnet werden kann und Funktionselemente, wie beispielsweise ein Bedienmenü einer Anzeigeeinrichtung, auf bequeme und komfortable Weise bedient werden können.

Diese Aufgabe wird durch die Merkmale der unabhängigen Ansprüche gelöst. Bevorzugte Weiterbildungen sind in den Unteransprüchen offenbart.

Die Erfindung betrifft eine Anordnung eines Hand-Auflageelements in einem Fahrzeug, insbesondere an einer Instrumententafel eines Fahrzeuges, das bevorzugt ein Nutzfahrzeug ist. Das Hand-Auflageelement ist derart angeordnet und/oder ausgebildet, dass ein Bedienmenü einer, vorzugsweise visuellen Anzeigeeinrichtung, insbesondere eines Touchscreens, des Fahrzeuges mit einer an dem Hand-Auflageelement aufgelegten und/oder abgestützten Hand eines Fahrers des Fahrzeuges bedienbar und/oder betätigbar ist, wobei das Hand-Auflageelement und die Anzeigeeinrichtung fahrzeugseitig, insbesondere an einer Konsole (beispielhaft eine Instrumententafel) des Fahrzeuges, festgelegt sind, und wobei das Hand-Auflageelement zwischen einer Gebrauchsposition und einer Verstauposition verlagerbar ist. Weiter ist das Hand-Auflageelement, in Fahrzeug-Hochrichtung gesehen, insbesondere mit einem definierten Höhenversatz beabstandet, unterhalb der Anzeigeeinrichtung verlagerbar angeordnet.

Auf diese Weise kann das Hand-Auflageelement besonders einfach in dem Fahrzeug angeordnet werden, da es sowohl in der Verstauposition als auch in der Gebrauchsposition unterhalb der Anzeigeeinrichtung angeordnet ist. So muss es beispielsweise nicht über die Anzeigeeinrichtung hinweg geklappt werden, um es in die unterhalb der Anzeigeeinrichtung angeordnete Gebrauchsposition zu bringen. Daher kann das Hand-Auflageelement auch besonders variabel angeordnet bzw. positioniert werden.

Die fahrzeugseitige Konsole kann hier durch jedes geeignete Bauteil gebildet sein, ist jedoch bevorzugt die Instrumententafel eines Fahrzeugs, insbesondere eines Nutzfahrzeugs, oder beispielsweise auch die Mittelkonsole eines Personenkraftwagens.

Des Weiteren ist die Begrifflichkeit "Hand" hier ausdrücklich in einem weiten Sinne zu verstehen. So ist diese hier nicht nur allein auf die Hand einer Person beschränkt, sondern kann insbesondere auch das Handgelenk und den unmittelbar an die Hand angrenzenden Bereich des Unterarms umfassen.

In einer bevorzugten Ausgestaltung der erfindungsgemäßen Anordnung kann das Hand-Auflageelement in der Verstauposition zumindest teilweise, insbesondere konturangepasst und/oder mit einem definierten Spaltabstand, in einer Ausnehmung einer fahrzeugseitigen Konsole angeordnet und/oder aufgenommen sein. Das Hand-Auflageelement ist dann in der Gebrauchsposition zumindest teilweise aus der Ausnehmung der Konsole herausverlagert und ragt von dieser ab. Die Anordnung und/oder Aufnahme des Hand-Auflageelements in der Ausnehmung ermöglicht eine besonders kompakte und optisch vorteilhafte Anordnung des Hand-Auflageelements in dessen Verstauposition. Vorzugsweise kann das Hand-Auflageelement in der Gebrauchsposition in etwa horizontal ausgerichtet von der Konsole abragen, um eine komfortable Abstützung und/oder Auflage einer Hand zu ermöglichen. Besonders bevorzugt kann das Hand-Auflageelement stirnseitig mit einem definierten Winkel, insbesondere zwischen 0° und 10°, relativ zur Horizontalebene leicht nach unten geneigt sein, um den Komfort noch weiter zu erhöhen.

Besonders bevorzugt kann die Ausnehmung derart ausgebildet sein, dass in der Nicht-Gebrauchsposition des Hand-Auflageelements eine sichtbare Stirnseite des Hand-Auflageelements oberflächenbündig mit einem das Hand-Auflageelement umgebenden Konsolenwandbereich ist. Auf diese Weise ist das Hand-Auflageelement in der Nicht-Gebrauchsposition äußerlich kaum sichtbar und nicht störend für den Fahrer und/oder den Fahrgast des Fahrzeuges angeordnet.

In einer weiteren bevorzugten Ausführung kann das Hand-Auflageelement schubladenartig an der Konsole festgelegt sein, wobei das Hand-Auflageelement zur Verlagerung von der Gebrauchsposition in die Verstauposition mittels einer Führungseinrichtung in eine Schubladenaufnahme der Konsole eingefahren werden kann, und wobei das Hand-Auflageelement zur Verlagerung von der Verstauposition in die Gebrauchsposition mittels der Führungseinrichtung aus der Schubladenaufnahme der Konsole ausgefahren werden kann. Durch die schubladenartige Festlegung des Hand-Auflageelements an der Konsole kann das Hand-Auflageelement auf besonders robuste Weise verlagerbar an der Konsole festgelegt werden. Zudem beansprucht das Hand-Auflageelement hier auch nur einen kleinen Bereich der Konsolenwand, so dass die Gestaltungsfreiheit für die Konsolenwand mit einer derartigen Festlegung kaum eingeschränkt wird.

Alternativ und/oder zusätzlich kann das Hand-Auflageelement um eine, insbesondere in Fahrzeug-Querrichtung ausgerichtete, Schwenkachse schwenkbar an der Konsole festgelegt sein, wobei das Hand-Auflageelement zur Verlagerung von der Gebrauchsposition in die Verstauposition in eine Richtung schwenkbar ist, und wobei das Hand-Auflageelement zur Verlagerung von der Verstauposition in die Gebrauchsposition in die entgegengesetzte Richtung schwenkbar ist. Auf diese Weise kann das Hand-Auflageelement besonders einfach bzw. mit besonders geringem Aufwand an der Konsole festgelegt werden. Die schwenkbare Festlegung des Hand-Auflageelements an dem Instrumententafel-Gehäuse eignet sich daher auch besonders für eine Nachrüstung der erfindungsgemäßen Anordnung an einem Fahrzeug. Zudem ermöglicht die schwenkbare Festlegung des Hand-Auflageelements auch eine besonders einfache Verstellung und/oder Einstellung der Gebrauchsposition des Hand-Auflageelements, ohne dessen Funktionsweise einzuschränken.

In einer Ausführungsform kann das Hand-Auflageelement ein Griffelement aufweisen, mittels dem das Hand-Auflageelement von der Gebrauchsposition in die Verstauposition und/oder umgekehrt verlagert werden kann. Ein derartiges Griffelement erleichtert die Verlagerung des Hand-Auflageelements von der Gebrauchsposition in die Verstauposition und/oder umgekehrt deutlich. Bevorzugt kann das Griffelement eine, in Fahrzeughochrichtung gesehen, nach unten offene Ausnehmung, insbesondere eine Griffmulde, an dem Hand-Auflageelement ausbilden, um das Hand-Auflageelement besonders kompakt und gleichzeitig optisch ansprechend zu gestalten.

In einer bevorzugten Ausführung kann die Festlegungseinrichtung wenigstens einen Energiespeicher, insbesondere ein Federelement, aufweisen, der das Hand-Auflageelement in Richtung Gebrauchsposition vorspannt, bevorzugt dergestalt, dass das wenigstens eine Federelement in der Verstauposition gespannt ist und bei einer Freigabe der Verlagerung des Hand-Auflageelements das Hand-Auflageelement in Richtung Gebrauchsposition verlagert. Der wenigstens eine Energiespeicher ermöglicht eine besonders komfortable Verlagerung des Hand-Auflageelements von der Verstauposition in die Gebrauchsposition.

Weiter bevorzugt kann die Festlegungseinrichtung eine Rast- und/oder Klemmeinrichtung aufweisen, mittels der das Hand-Auflageelement derart, insbesondere mit der Konsole, verrastet und/oder verklemmt werden kann, dass eine Relativbewegung zwischen dem Hand-Auflageelement und der Konsole blockiert ist. Dadurch ist es möglich, das Hand-Auflageelement in wenigstens einer definierten Rast- und/oder Klemmposition festzulegen bzw. zu fixieren. Vorzugsweise kann das Hand-Auflageelement in der Gebrauchsposition und/oder in der Verstauposition und/oder in wenigstens einer zwischen der Gebrauchsposition und der Nicht-Gebrauchsposition angeordneten Zwischenposition verrastet und/oder verklemmt werden. Die Verrastung und/oder Verklemmung des Hand-Auflageelements in der Verstauposition gewährleistet dabei, dass das Hand-Auflageelement auch in der Verstauposition verbleibt, wenn es nicht benötigt wird. Die Verrastung und/oder Verklemmung des Hand-Auflageelements in der Gebrauchsposition und/oder in der wenigstens einen Zwischenposition stellt eine zuverlässige Abstützung der Hand des Fahrers und/oder des Fahrgasts mittels des Hand-Auflageelements sicher.

Vorzugsweise kann die Rast- und/oder Klemmeinrichtung derart ausgebildet sein, dass die Rastverbindung zwischen dem Hand-Auflageelement und der Konsole durch eine, insbesondere in Verlagerungsrichtung des Hand-Auflageelements gerichtete, Druck- und/oder Zugbetätigung des Hand-Auflageelements gelöst werden kann. Dadurch kann die wenigstens eine Rastverbindung auf besonders einfache und intuitive Weise gelöst werden. Besonders bevorzugt kann eine Verrastung und/oder Verklemmung des Hand-Auflageelements in der Verstauposition des Hand-Auflageelements mittels eines sogenannten "Push-to-open"-Mechanismus gelöst werden.

Erfindungsgemäß weist das Hand-Auflageelement wenigstens ein Bedienelement, insbesondere eine Taste und/oder einen Drehknopf, auf, mittels dessen das Bedienmenü der Anzeigeeinrichtung und/oder eine Lautstärke eines Fahrzeug-Infotainment-Systems bedient oder betätigt werden kann. Auf diese Weise wird die Funktionalität des Hand-Auflageelements deutlich erhöht. Besonders bevorzugt kann das wenigstens eine Bedienelement derart an dem Hand-Auflageelement angeordnet sein, dass es sowohl in der Gebrauchsposition als auch in der Verstauposition des Hand-Auflageelements betätigt werden kann. Dadurch ist es möglich, das Bedienmenü und/oder die Lautstärke des Fahrzeug-Infotainment-Systems jederzeit bzw. zumindest in den wesentlichen Positionen des Hand-Auflageelements mittels des wenigstens einen Bedienelements des Hand-Auflageelements zu betätigen. Sofern das Hand-Auflageelement schubladenartig an der Konsole festgelegt ist, kann das wenigstens eine Bedienelement bevorzugt an einer Stirnseite des Hand-Auflageelements angeordnet sein.

Vorzugsweise bildet eine, in Fahrzeug-Hochrichtung gesehen, obere Außenwand und/oder wenigstens eine, insbesondere dem Fahrer und/oder dem Fahrgast des Fahrzeuges zugewandte, seitliche Außenwand, insbesondere eine Stirnseite, des Hand-Auflageelements eine Hand-Auflagefläche aus. Dadurch kann die Hand des Fahrers und/oder des Fahrgastes besonders einfach und gleichzeitig komfortabel abgestützt werden.

Weiter bevorzugt kann wenigstens eine Kante einer Hand-Auflagefläche des Hand-Auflageelements verrundet und/oder eine Hand-Auflagefläche des Hand-Auflageelements gepolstert ausgebildet sein. Dadurch kann die Hand des Fahrers und/oder des Fahrgasts auf besonders komfortable Weise abgestützt werden.

Vorzugsweise kann das Hand-Auflageelement zudem plattenartig und/oder quaderförmig und/oder, insbesondere in Fahrzeug-Querrichtung gesehen, länglich ausgebildet sein, um das Hand-Auflageelement besonders einfach und/oder funktionsoptimiert auszubilden.

Ferner wird ein Fahrzeug, insbesondere ein Nutzfahrzeug, mit der erfindungsgemäßen Anordnung beansprucht. Die sich daraus ergebenden Vorteile sind identisch mit den bereits in der Beschreibung gewürdigten Vorteilen der erfindungsgemäßen Anordnung, so dass diese an dieser Stelle nicht wiederholt werden.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Fig. 1: in einer Perspektivdarstellung eine Instrumententafel eines Kraftfahrzeuges mit der erfindungsgemäße Anordnung;
- Fig. 2: in einer Perspektivdarstellung die erfindungsgemäße Anordnung mit dem Hand-Auflageelement in der Nicht-Gebrauchsposition;
- Fig. 3: das Hand-Auflageelement in der Gebrauchsposition;
- Fig. 4: eine schematische Schnittdarstellung entlang der Schnittebene A-A aus Fig. 2;
- Fig. 5: eine schematische Schnittdarstellung entlang der Schnittebene B-B aus Fig. 3;
- Fig. 6: in einer Darstellung gemäß Fig. 4 eine zweite Ausführungsform des Hand-Auflageelements;
- Fig. 7: in einer Darstellung gemäß Fig. 5 die zweite Ausführungsform des Hand-Auflageelements; und
- Fig. 8: in einer Darstellung gemäß Fig. 4 eine zweite Ausführungsform der erfindungsgemäßen Anordnung; und
- Fig. 9: in einer Perspektivdarstellung eine zweite Ausführungsform einer Fahrzeug-Instrumententafel mit der erfindungsgemäße Anordnung.

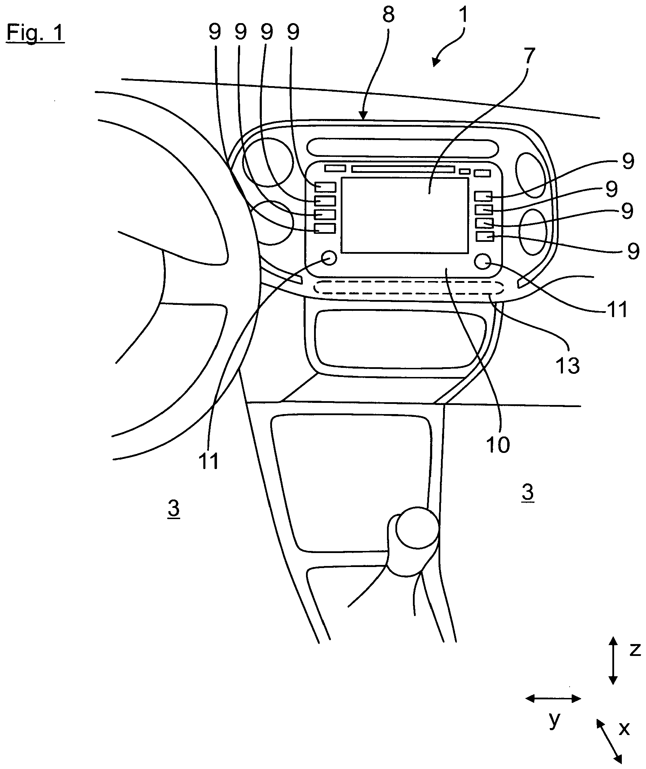

In Fig. 1 ist schematisch ein Teil einer Instrumententafel 1 eines Fahrzeuges gezeigt. Die Instrumententafel 1 weist eine, in Fahrzeug-Querrichtung y gesehen, zwischen einem linken und einem rechten, vorderen Fußraum 3 des Fahrzeuges angeordnetes Bedienelement 10 auf. Das Bedienelement 10 ist dabei derart angeordnet, dass ein Fahrer und/oder ein Fahrgast des Fahrzeuges seine Blickrichtung nur geringfügig verändern muss, um entweder den Straßenverkehr oder das Bedienelement 10 im Blick zu haben.

Das Bedienelement 10 weist, hier lediglich beispielhaft, einen als Touchscreen ausgebildeten Sekundär-Bildschirm als Anzeigeeinrichtung 7 auf, mittels dem ein durch den Fahrer und/oder den Fahrgast bedienbares Bedienmenü angezeigt wird. Über das Bedienmenü können verschiedene Fahrzeugfunktionen, beispielsweise ein Infotainment-System oder ein Navigations-System des Fahrzeuges, bedient bzw. betätigt werden. Die Bedienung des Bedienmenüs erfolgt dabei mittels Touch-Eingaben an dem Sekundär-Bildschirm sowie optional auch über zusätzliche Eingabeelemente, hier beispielhaft Tasten 9 und Drehknöpfe 11.

Des Weiteren weist die Instrumententafel 1 in einem mittleren Bereich 8 ein, in FahrzeugHochrichtung z gesehen, mit einem definierten Höhenversatz von dem Bildschirm beabstandetes, unterhalb des Bedienelements 10 angeordnetes Hand-Auflageelement 13 auf, das in Fig. 1 lediglich mit gestrichelten Linien dargestellt ist. An dem Hand-Auflageelement 13 kann der Fahrer und/oder der Fahrgast des Fahrzeuges seine Hand auflegen bzw. abstützen, während er das Bedienelement 10 betätigt. Dadurch wird die Betätigung des Bedienelements 10 bzw. die Bedienung des an dem Sekundär-Display angezeigten Bedienmenüs deutlich erleichtert. Das Hand-Auflageelement 13 ist dabei von einer Gebrauchsposition in eine Verstauposition und umgekehrt verlagerbar an der Instrumententafel 1 festgelegt.

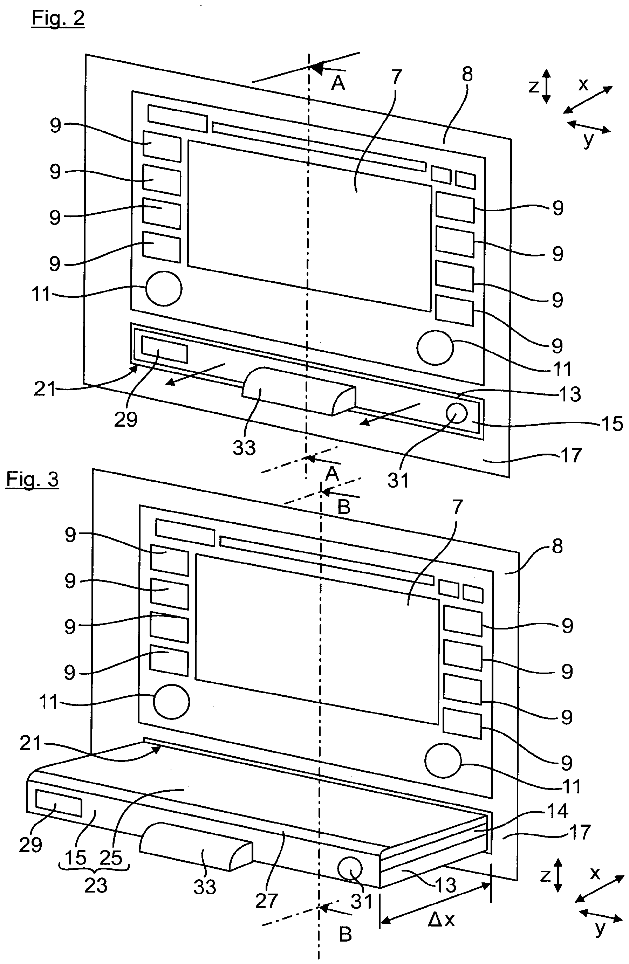

In Fig. 2 ist das Hand-Auflageelement 13 in seiner Verstauposition gezeigt, während in Fig. 3 das Hand-Auflageelement 13 in seiner Gebrauchsposition gezeigt ist. In der Nicht-Gebrauchsposition gemäß Fig. 2 ist das Hand-Auflageelement 13 in einer Ausnehmung 21 der Instrumententafel 1 angeordnet. Bevorzugt ist dabei in der Verstauposition eine Stirnseite 15 des Hand-Auflageelements 13 oberflächenbündig mit einem das Hand-Auflageelement 13 umgebenden Wandbereich 17 der Instrumententafel 1. Dadurch kann das Hand-Auflageelement 13 in seiner Verstauposition äußerlich unauffällig in der Ausnehmung 21 der Instrumententafel 1 angeordnet werden.

In der Gebrauchsposition gemäß Fig. 3 ist das Hand-Auflageelement 13, in Fahrzeug-Längsrichtung x gesehen, nach hinten verlagert bzw. mittels einer Führungseinrichtung 24 schubladenartig aus der Ausnehmung 21 der Instrumententafel 1 herausgefahren. Die Stirnseite 15 des Hand-Auflageelements 13 ragt dabei, in Fahrzeug-Längsrichtung x gesehen, mit einem definierten Längsversatz Δx nach hinten von der Mittelkonsole 8 ab. Des Weiteren ist das Hand-Auflageelement 13, hier lediglich beispielhaft, als quaderförmige Platte ausgebildet, die sich, in Fahrzeug-Querrichtung y gesehen, über den gesamten Bedienbereich des Bedienelements 10 erstreckt.

In einer bevorzugten Ausführung ist eine durch die Stirnseite 15 des Hand-Auflageelements 13 und durch eine, in Fahrzeug-Hochrichtung z gesehen, obere Außenwand 25 des Hand-Auflageelements 13 gebildete Auflagefläche 23 des Hand-Auflageelements 13 gepolstert ausgebildet. Weiter bevorzugt ist zudem eine den Übergang zwischen der Stirnseite 15 und der oberen Außenwand 25 ausbildende Kante 27 des Hand-Auflageelements 13 verrundet ausgeführt. Durch die Polsterung der Auflagefläche 23 und die Verrundung der Kante 27 wird eine besonders komfortable Nutzung des Hand-Auflageelements 13 möglich.

Wie aus Fig. 2 und 3 weiter hervorgeht, weist das Hand-Auflageelement 13 Eingabeelemente auf, hier lediglich beispielhaft eine Taste 29 und einen Drehknopf 31. Mittels diesen kann beispielsweise das Bedienmenü des Sekundär-Bildschirms bedient werden. Ebenso wäre es aber auch denkbar, dass mittels der Taste 29 und dem Drehknopf 31 des Hand-Auflageelements 13 Fahrzeugfunktionen direkt angesteuert werden. So könnte beispielsweise der Drehknopf 31 als Lautstärkeregler für das Infotainment-System des Fahrzeuges ausgebildet sein.

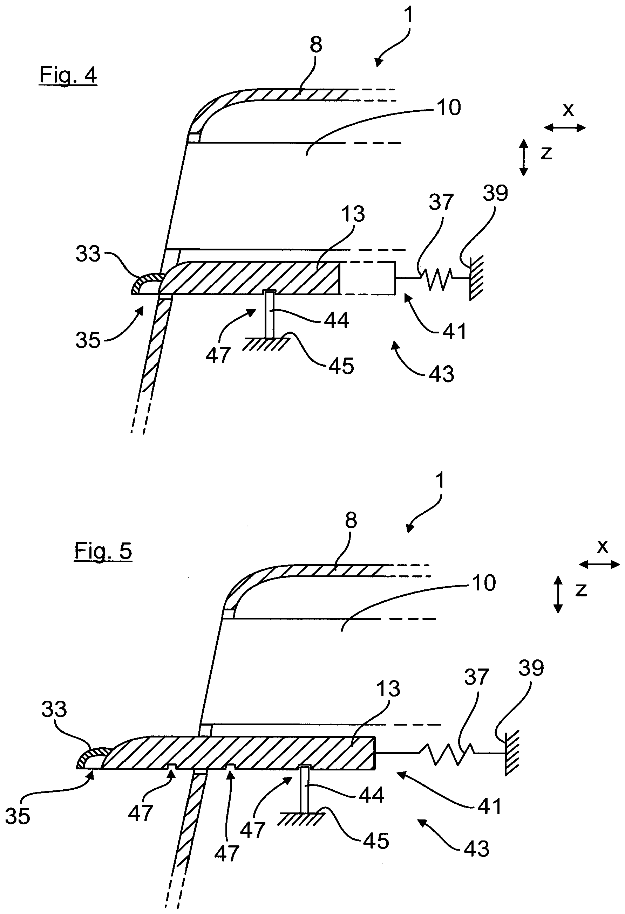

Wie in den Fig. 2 und 3 zudem gezeigt ist, kann das Hand-Auflageelement 13 optional auch ein, in Fahrzeug-Längsrichtung x gesehen, nach hinten von der Stirnseite 15 des Hand-Auflageelements 13 abragendes Griffelement 33 aufweisen. Mittels des Griffelements 33 ist das Hand-Auflageelement 13 für den Fahrer und/oder den Fahrgast des Fahrzeuges greifbar, so dass es besonders einfach von der Verstauposition in die Gebrauchsposition und umgekehrt verlagert werden kann. Gemäß Fig. 4 und 5 ist das Griffelement 33, hier lediglich beispielhaft, dünnwandig ausgebildet und derart an dem Hand-Auflageelement 13 festgelegt, dass es eine, in Fahrzeug-Hochrichtung z gesehen, nach unten offene Griffmulde 35 ausbildet. In diese Griffmulde 35 kann der Fahrer und/oder der Fahrgast des Fahrzeuges mit seinen Fingerspitzen eingreifen.

Des Weiteren kann das Hand-Auflageelement 13, wie in den Fig. 4 und 5 schematisch gezeigt, optional in Wirkverbindung mit einem Energiespeicher, hier beispielhaft ein Federelement 37, sein. Das Federelement 37 ist hier beispielhaft als Schraubenfeder ausgebildet, wobei ein Endbereich der Schraubenfeder an einer ortsfesten Abstützbasis 39 des Fahrzeuges und der andere Endbereich der Schraubenfeder an einem, in Fahrzeug-Längsrichtung x gesehen, vorderen Endbereich 41 des Hand-Auflageelements 13 festgelegt ist. Durch Verlagern des Hand-Auflageelements 13 von der Gebrauchsposition in die Verstauposition wird das Federelement 37 unter Aufbau einer, in Fahrzeug-Längsrichtung x gesehen, nach hinten wirkenden Federkraft gespannt. In der Verstauposition wird das Hand-Auflageelement 13 unter Abbau der Federkraft des Federelements 37 automatisch in die Gebrauchsposition verlagert, sofern die Bewegung des Hand-Auflageelements 13 in Fahrzeug-Längsrichtung x nach hinten nicht blockiert wird.

Weiter optional kann eine in den Fig. 4 und 5 lediglich schematisch gezeigte Rasteinrichtung 43 vorgesehen sein, mittels der das Hand-Auflageelement 13 in definierten Rastpositionen derart verrastet werden kann, dass eine Relativbewegung zwischen dem Hand-Auflageelement 13 und der Instrumententafel 1 verhindert wird. Die Rasteinrichtung 43 weist, hier lediglich bespielhaft, ein elastisches Stabelement 45 auf, das mit einem Endbereich an einem ortsfesten Festlegungselement 47 des Fahrzeuges festgelegt ist. Weiter beispielhaft weist die Rasteinrichtung 43, hier beispielsweise drei, an dem Hand-Auflageelement 13 ausgebildete Ausnehmungen 47 auf. Die Ausnehmungen 47 sind dabei derart an dem Hand-Auflageelement 13 angeordnet, dass das elastische Stabelement 44 in definierten Rastpositionen des Hand-Auflageelements 13 in die Aufnehmungen 47 des Hand-Auflageelements 13 einrasten kann. Die definierten Rastpositionen des Hand-Auflageelements 13 sind hier beispielhaft die Verstauposition des Hand-Auflageelements, die Gebrauchsposition des Hand-Auflageelements 13 sowie eine zwischen der Gebrauchsposition und der Nicht-Gebrauchsposition angeordnete Zwischenposition des Hand-Auflageelements 13. Durch Drücken und/oder Ziehen des Hand-Auflageelements 13 in Fahrzeug-Längsrichtung x können die Rastverbindungen zwischen dem Hand-Auflageelement 13 und dem Befestigungselement 45 des Fahrzeuges auf einfache Weise gelöst werden.

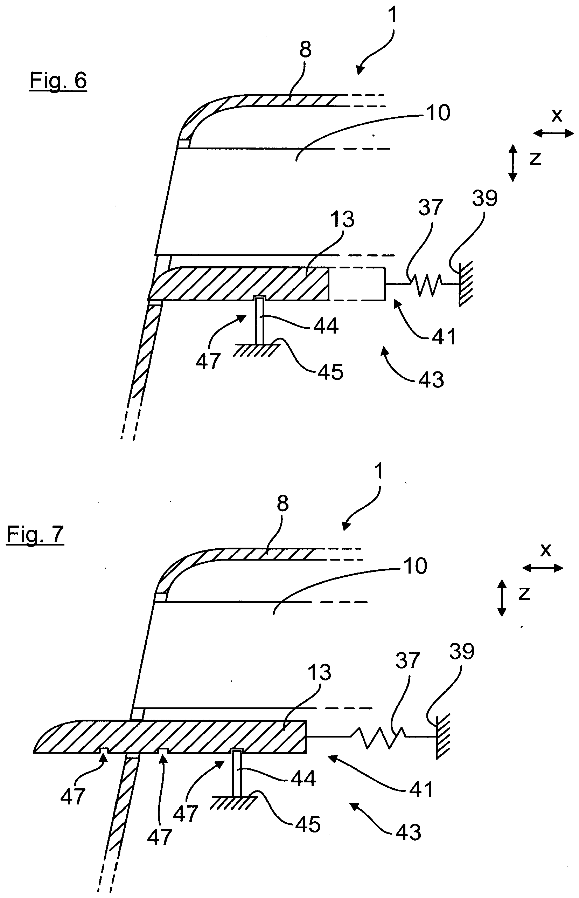

In den Fig. 6 und 7 ist das Hand-Auflageelement 13 in einer zweiten Ausführungsform gezeigt. Das Hand-Auflageelement 13 weist hier kein Griffelement 33 auf, mittels dem das Hand-Auflageelement 13 von der Verstauposition in die Gebrauchsposition und umgekehrt verlagert werden kann. Die Verlagerung des Hand-Auflageelements 13 von der Verstauposition in die Gebrauchsposition erfolgt hier mittels eines sogenannten "Push-to-open"-Mechanismus. Die Rasteinrichtung 43 ist dabei derart ausgebildet, dass die Rastverbindung zwischen dem Hand-Auflageelement 13 und dem Festlegungselement 45 gelöst wird, wenn das Hand-Auflageelement 13 in der Verstauposition, in Fahrzeug-Längsrichtung x gesehen, nach vorne gedrückt wird. Bei gelöster Rastverbindung wird das Hand-Auflageelement 13 dann automatisch mittels des Federelements 45 in die Gebrauchsposition verlagert. Befindet sich das Hand-Auflageelement 13 in der Gebrauchsposition, kann es gegriffen und je nach Bedarf verlagert werden.

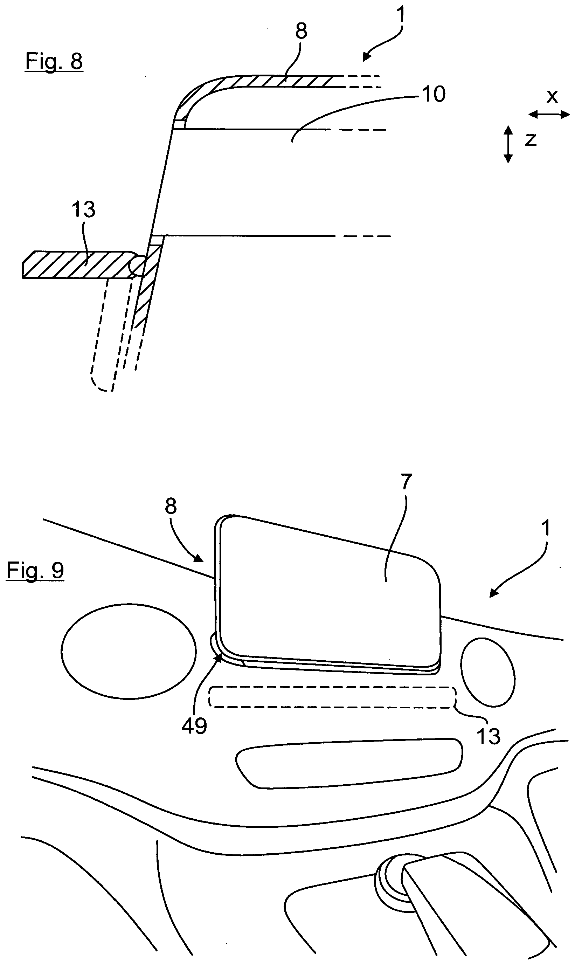

In Fig. 8 ist schematisch eine zweite Ausführungsform der erfindungsgemäßen Anordnung gezeigt. Das Hand-Auflageelement 13 ist hier, im Gegensatz zu den in Fig. 1 bis 7 gezeigten Ausführungen, nicht schubladenartig verfahrbar, um es von der Gebrauchsposition in die Verstauposition und umgekehrt zu verlagern. Vielmehr ist das Hand-Auflageelement 13 hier schwenkbar an einem abragenden Festlegungselement 51 der Instrumententafel 1 festgelegt, so dass es um eine in Fahrzeug-Querrichtung y ausgerichtete Schwenkachse geschwenkt werden kann. Zur Verlagerung des Hand-Auflageelements 13 von der in Fig. 8 gezeigten Gebrauchsposition in die in Fig. 8 mit gestrichelten Linien angedeutete Verstauposition wird das Hand-Auflageelement 13, in Fahrzeug-Hochrichtung z gesehen, nach unten geschwenkt, bis es in Anlage mit der Instrumententafel 1 ist. Zur Verlagerung des Hand-Auflageelements 13 von der in Fig. 8 gezeigten Gebrauchsposition in die in Fig. 8 mit gestrichelten Linien angedeutete Verstauposition wird das Hand-Auflageelement 13, in Fahrzeug-Hochrichtung z gesehen, nach oben geschwenkt, bis es in etwa horizontal ausgerichtet ist.

In Fig. 9 ist die Instrumententafel 1 in einer zweiten Ausführungsform gezeigt. Der Sekundär-Bildschirm als Anzeigeeinrichtung 7 ist hier von einer Gebrauchsposition in eine Verstauposition und umgekehrt verlagerbar an der Instrumententafel 1 festgelegt. In der Verstauposition ist der Sekundär-Bildschirm äußerlich unsichtbar in einer Ausnehmung 49 der Instrumententafel 1 angeordnet bzw. aufgenommen, während in der in Fig. 9 gezeigten Gebrauchsposition der Sekundär-Bildschirm aus der Ausnehmung 49 herausgefahren ist. Das in Fig. 9 mit gestrichelten Linien angedeutete Hand-Auflageelement 13 ist hier, ebenso wie bei der in Fig. 1 gezeigten ersten Ausführungsform der Instrumententafel1, in Fahrzeug-Hochrichtung z gesehen, unterhalb des Sekundär-Bildschirm angeordnet. Dadurch kann auch hier der als Touchsreen ausgebildete Sekundär-Bildschirm mit einer an dem Hand-Auflageelement 13 aufgelegten bzw. abgestützten Hand des Fahrers und/oder des Fahrgasts des Fahrzeugs betätigt werden.

### Bezugszeichen

- 1: Instrumententafel
- 3: Fußraum
- 7: Anzeigeeinrichtung
- 8: mittlerer Bereich der Instrumententafel9Taste
- 10: Bedienelement
- 11: Drehknopf
- 13: Hand-Auflageelement
- 15: Stirnseite
- 17: Wandbereich
- 21: Ausnehmung
- 23: Auflagefläche
- 24: Führungseinrichtung
- 25: obere Außenwand
- 27: Kante
- 29: Taste
- 31: Drehknopf
- 33: Griffelement
- 35: Griffmulde
- 37: Federelement
- 39: Abstützbasis
- 41: vorderer Endbereich
- 43: Rasteinrichtung
- 44: Stabelement
- 45: Festlegungselement
- 47: Ausnehmung
- 49: Ausnehmung
- 51: Festlegungselement

## Patentansprüche

1. Anordnung eines Hand-Auflageelements und einer Anzeigeeinrichtung (7) für ein Fahrzeug, wobei das Hand-Auflageelement (13) derart angeordnet und/oder ausgebildet ist, dass ein Bedienmenü einer Anzeigeeinrichtung (7) des Fahrzeuges mit einer an dem Hand-Auflageelement (13) aufgelegten und/oder abgestützten Hand eines Fahrers des Fahrzeuges bedienbar und/oder betätigbar ist, wobei das Hand-Auflageelement (13) und die Anzeigeeinrichtung (7) fahrzeugseitig festgelegt sind, und wobei das Hand-Auflageelement (13) zwischen einer Gebrauchsposition und einer Verstauposition verlagerbar und, in Fahrzeug-Hochrichtung (z) gesehen, unterhalb der Anzeigeeinrichtung (7) angeordnet ist, **dadurch gekennzeichnet, dass** das Hand-Auflageelement (13) wenigstens ein Bedienelement (29, 31) aufweist, mittels dessen das Bedienmenü der Anzeigeeinrichtung (7) und/oder eine Lautstärke eines Fahrzeug-Infotainment-Systems bedienbar und/oder betätigbar ist.

2. Anordnung nach Anspruch 1, **dadurch gekennzeichnet, dass** das Hand-Auflageelement (13) in der Verstauposition zumindest teilweise, insbesondere kon-turangepasst und/oder mit einem definierten Spaltabstand, in einer Ausnehmung (21) der fahrzeugseitigen Konsole (1), insbesondere einer Instrumententafel, angeordnet und/oder aufgenommen ist, und dass das Hand-Auflageelement (13) in der Gebrauchsposition zumindest teilweise aus der Ausnehmung (21) der Konsole (1) herausverlagert ist und von dieser abragt, insbesondere in etwa horizontal ausgerichtet von dieser abragt.

3. Anordnung nach Anspruch 2, **dadurch gekennzeichnet, dass** die Ausnehmung (21) derart ausgebildet ist, dass in der Verstauposition des Hand-Auflageelements (13) eine sichtbare Stirnseite (15) des Hand-Auflageelements (13) oberflächenbündig mit einem das Hand-Auflageelement (13) umgebenden Konsolenwandbereich (17) ist.

4. Anordnung nach Anspruch 2 oder 3, **dadurch gekennzeichnet, dass** das Hand-Auflageelement (13) schubladenartig an der Konsole (1) festgelegt ist, wobei das Hand-Auflageelement (13) zur Verlagerung von der Gebrauchsposition in die Verstauposition mittels einer Führungseinrichtung (24) in eine Schubladenaufnahme der Konsole (1) einfahrbar ist, und wobei das Hand-Auflageelement (13) zur Verlagerung von der Verstauposition in die Gebrauchsposition mittels der Führungseinrichtung (24) aus der Schubladenaufnahme der Konsole (1) ausfahrbar ist.

5. Anordnung nach Anspruch 2 oder 3, **dadurch gekennzeichnet, dass** das Hand-Auflageelement (13) um eine, insbesondere in Fahrzeug-Querrichtung (y) ausgerichtete, Schwenkachse schwenkbar an der Konsole (1) festgelegt ist, wobei das Hand-Auflageelement (13) zur Verlagerung von der Gebrauchsposition in die Verstauposition in eine Richtung schwenkbar ist, und wobei das Hand-Auflageelement (13) zur Verlagerung von der Verstauposition in die Gebrauchsposition in die entgegengesetzte Richtung schwenkbar ist.

6. Anordnung nach einem der vorhergehenden Ansprüche, **dadurch gekennzeichnet, dass** das Hand-Auflageelement (13) ein Griffelement (33) aufweist, mittels dem das Hand-Auflageelement (13) von der Gebrauchsposition in die Verstauposition und/oder umgekehrt verlagerbar ist, wobei bevorzugt vorgesehen ist, dass das Griffelement (33) eine, in Fahrzeug-Hochrichtung (z) gesehen, nach unten offene Ausnehmung (35), insbesondere eine Griffmulde, an dem Hand-Auflageelement (13) ausbildet.

7. Anordnung nach einem der vorhergehenden Ansprüche, **dadurch gekennzeichnet, dass** die Festlegungseinrichtung wenigstens einen Energiespeicher (37), insbesondere ein Federelement, aufweist, der das Hand-Auflageelement (13) in Richtung Gebrauchsposition vorspannt, bevorzugt dergestalt, dass das wenigstens eine Federelement in der Verstauposition gespannt ist und bei einer Freigabe der Verlagerung des Hand-Auflageelements (13) das Hand-Auflageelement (13) in Richtung Gebrauchsposition verlagert.

8. Anordnung nach einem der vorhergehenden Ansprüche, **dadurch gekennzeichnet, dass** die Festlegungseinrichtung eine Rast- und/oder Klemmeinrichtung (43) aufweist, mittels der das Hand-Auflageelement (13) derart, insbesondere mit der fahrzeugseitigen Konsole (8), verrastbar und/oder verklemmbar ist, dass eine Relativbewegung zwischen dem Hand-Auflageelement (13) und der Konsole (1) blockiert ist.

9. Anordnung nach Anspruch 8, **dadurch gekennzeichnet, dass** die Rast- und/oder Klemmeinrichtung (43) derart ausgebildet ist, dass die Rastverbindung zwischen dem Hand-Auflageelement (13) und der Konsole (1) durch eine, insbesondere in Verlagerungsrichtung des Hand-Auflageelements (13) gerichtete, Druck- und/oder Zugbetätigung des Hand-Auflageelements (13) lösbar ist.

10. Anordnung nach einem der vorhergehenden Ansprüche, **dadurch gekennzeichnet, dass** das Bedienelement (29, 31) derart an dem Hand-Auflageelement (1) angeordnet ist, dass es sowohl in der Gebrauchsposition als auch in der Verstauposition des Hand-Auflageelements (13) betätigbar ist.

11. Anordnung nach einem der vorhergehenden Ansprüche, **dadurch gekennzeichnet, dass** eine, in Fahrzeug-Hochrichtung (z) gesehen, obere Außenwand (25) und/oder wenigstens eine, insbesondere dem Fahrer des Fahrzeuges zugewandte, seitliche Außenwand (15), insbesondere zumindest eine Stirnseite, des Hand-Auflageelements (13) eine Hand-Auflagefläche (23) ausbilden.

12. Anordnung nach einem der vorhergehenden Ansprüche, **dadurch gekennzeichnet, dass** wenigstens eine Kante (27) einer Hand-Auflagefläche (23) des Hand-Auflageelements (13) verrundet ausgebildet ist, und/oder dass eine Hand-Auflagefläche (23) des Hand-Auflageelements (13) gepolstert ausgebildet ist.

13. Anordnung nach einem der vorhergehenden Ansprüche, **dadurch gekennzeichnet, dass** das Hand-Auflageelement (13) plattenartig und/oder quaderförmig und/oder, insbesondere in Fahrzeug-Querrichtung (y) gesehen, länglich ausgebildet ist.

14. Fahrzeug, insbesondere Nutzfahrzeug, mit einer Anordnung nach einem der Ansprüche 1 bis 13.

## Claims

1. Arrangement of a hand rest element and of a display device (7) for a vehicle, wherein the hand rest element (13) is disposed and/or designed such that an operating menu of a display device (7) of the vehicle can be operated and/or activated with a hand of a driver of the vehicle rested and/or supported on the hand rest element (13), wherein the hand rest element (13) and the display device (7) are fixed to the vehicle, and wherein the hand rest element (13) can be displaced between an in-use position and a stowed position and is disposed beneath the display device (7) when viewed in the vehicle's vertical direction (z), **characterized in that** the hand rest element (13) comprises at least one operating element (29, 31), by means of which the operating menu of the display device (7) and/or a volume control of a vehicle-infotainment system can be operated and/or activated.

2. Arrangement according to Claim 1, **characterized in that** in the stowed position the hand rest element (13) is disposed and/or accommodated at least partly in a recess (21) of the vehicle-mounted console (1), in particular of an instrument panel, in particular so as to match the profile and/or with a defined separation gap, and that the hand rest element (13) can be at least partly displaced out of the recess (21) of the console (1) into the in-use position and protrudes from the recess, in particular being oriented approximately horizontally.

3. Arrangement according to Claim 2, **characterized in that** the recess (21) is designed such that in the stowed position of the hand rest element (13) a visible end face (15) of the hand rest element (13) is flush with the surface of a wall region of the console (17) enclosing the hand rest element (13).

4. Arrangement according to Claim 2 or 3, **characterized in that** the hand rest element (13) is fixed to the console (1) in the manner of a drawer, wherein the hand rest element (13) can be retracted by means of a guide device (24) into a drawer receptacle of the console (1) for displacement from the in-use position into the stowed position, and wherein the hand rest element (13) can be extracted from the drawer receptacle of the console (1) by means of the guide device (24) for displacement from the stowed position into the in-use position.

5. Arrangement according to Claim 2 or 3, **characterized in that** the hand rest element (13) is fixed to the console (1) so as to be pivotable about a pivot axis, which is in particular oriented in the vehicle's transverse direction (y), wherein the hand rest element (13) is pivotable in one direction for displacement from the in-use position into the stowed position, and wherein the hand rest element (13) is pivotable in the opposite direction for displacement from the stowed position into the in-use position.

6. Arrangement according to any one of the preceding claims, **characterized in that** the hand rest element (13) comprises a handle element (33), by means of which the hand rest element (13) can be displaced from the in-use position into the stowed position and/or vice-versa, wherein it is preferably provided that the handle element (33) forms a recess (35) on the hand rest element (13), in particular a handle recess, that is open at the bottom when viewed in the vehicle's vertical direction (z).

7. Arrangement according to any one of the preceding claims, **characterized in that** the fixing device comprises at least one energy storage device (37), in particular a spring element, which biases the hand rest element (13) in the direction of the in-use position, preferably such that the at least one spring element is tensioned in the stowed position and displaces the hand rest element (13) in the direction of the in-use position when the displacement of the hand rest element (13) is enabled.

8. Arrangement according to any one of the preceding claims, **characterized in that** the fixing device comprises a latching and/or clamping device (43), by means of which the hand rest element (13) can be latched and/or clamped, in particular to the vehicle-mounted console (8), such that a relative movement between the hand rest element (13) and the console (1) is blocked.

9. Arrangement according to Claim 8, **characterized in that** the latching and/or clamping device (43) is designed such that the latching connection between the hand rest element (13) and the console (1) can be released by a pushing and/or pulling activation of the hand rest element (13), in particular directed in the displacement direction of the hand rest element (13).

10. Arrangement according to any one of the preceding claims, **characterized in that** the operating element (29, 31) is disposed on the hand rest element (1) such that it can be operated both in the in-use position as well as in the stowed position of the hand rest element (13).

11. Arrangement according to any one of the preceding claims, **characterized in that** an upper outer wall (25) when viewed in the vehicle's vertical direction (z) and/or at least one lateral outer wall (15), in particular at least one end face of the hand rest element (13), in particular facing the driver of the vehicle, form a hand rest surface (23).

12. Arrangement according to any one of the preceding claims, **characterized in that** at least one edge (27) of a hand rest surface (23) of the hand rest element (13) is of a rounded form and/or that a hand rest surface (23) of the hand rest element (13) is of a padded form.

13. Arrangement according to any one of the preceding claims, **characterized in that** the hand rest element (13) is of a plate-shaped form and/or of a cuboid form and/or of an elongated form, in particular when viewed in the vehicle's transverse direction (y).

14. Vehicle, in particular a commercial vehicle, with an arrangement according to any one of Claims 1 to 13.

## Revendications

1. Agencement d'un élément de repose-paume et d'un dispositif d'affichage (7) pour un véhicule, l'élément de repose-paume (13) étant disposé et/ou réalisé de telle sorte qu'un menu de commande d'un dispositif d'affichage (7) du véhicule puisse être commandé et/ou activé avec une main d'un conducteur du véhicule automobile posée et/ou supportée sur l'élément de repose-paume (13), l'élément de repose-paume (13) et le dispositif d'affichage (7) étant fixés du côté du véhicule, et l'élément de repose-paume (13) pouvant être déplacé entre une position d'utilisation et une position de rangement, et, vu dans la direction verticale du véhicule (z), étant disposé en dessous du dispositif d'affichage (7), **caractérisé en ce que** l'élément de repose-paume (13) présente au moins un élément de commande (29, 31) au moyen duquel le menu de commande du dispositif d'affichage (7) et/ou une intensité de volume d'un système d'info-divertissement du véhicule peuvent être commandés et/ou activés.

2. Agencement selon la revendication 1, **caractérisé en ce que** l'élément de repose-paume (13), dans la position de rangement, est disposé et/ou reçu au moins en partie, en particulier de manière adaptée au contour et/ou à un espacement défini, dans un évidement (21) de la console (1) du côté du véhicule, en particulier un tableau de bord et **en ce que** l'élément de repose-paume (13), dans la position d'utilisation, est décalé au moins en partie hors de l'évidement (21) de la console (1) et fait saillie depuis celle-ci, en particulier est orienté et fait saillie depuis celle-ci approximativement horizontalement.

3. Agencement selon la revendication 2, **caractérisé en ce que** l'évidement (21) est réalisé de telle sorte que dans la position de rangement de l'élément de repose-paume (13), un côté frontal visible (15) de l'élément de repose-paume (13) est en affleurement de surface avec une région de paroi de console (17) entourant l'élément de repose-paume (13).

4. Agencement selon la revendication 2 ou 3, **caractérisé en ce que** l'élément de repose-paume (13) est fixé à la manière d'un tiroir sur la console (1), l'élément de repose-paume (13), pour le déplacement de la position d'utilisation dans la position de rangement, pouvant être rentré dans un logement de tiroir de la console (1) au moyen d'un dispositif de guidage (24), et l'élément de repose-paume (13), pour le déplacement de la position de rangement dans la position d'utilisation, pouvant être sorti du logement de tiroir de la console (1) au moyen du dispositif de guidage (24).

5. Agencement selon la revendication 2 ou 3, **caractérisé en ce que** l'élément de repose-paume (13) est fixé à la console (1) de manière à pouvoir pivoter autour d'un axe de pivotement orienté notamment dans la direction transversale du véhicule (y), l'élément de repose-paume (13), pour le déplacement de la position d'utilisation dans la position de rangement, pouvant pivoter dans une direction, et l'élément de repose-paume (13), pour le déplacement de la position de rangement dans la position d'utilisation, pouvant pivoter dans la direction inverse.

6. Agencement selon l'une quelconque des revendications précédentes, **caractérisé en ce que** l'élément de repose-paume (13) présente un élément de préhension (33) au moyen duquel l'élément de repose-paume (13) peut être déplacé de la position d'utilisation dans la position de rangement et/ou inversement, où il est prévu de préférence que l'élément de préhension (33), vu dans une direction verticale du véhicule (z), constitue un évidement ouvert vers le bas (35), en particulier un creux de préhension, au niveau de l'élément de repose-paume (13).

7. Agencement selon l'une quelconque des revendications précédentes, **caractérisé en ce que** le dispositif de fixation présente au moins un accumulateur d'énergie (37), en particulier un élément de ressort, qui précontraint l'élément de repose-paume (13) dans la direction de la position d'utilisation, de préférence de telle sorte que l'au moins un élément de ressort soit tendu dans la position de rangement, et dans le cas d'une libération du déplacement de l'élément de repose-paume (13), déplace l'élément de repose-paume (13) dans la direction de la position d'utilisation.

8. Agencement selon l'une quelconque des revendications précédentes, **caractérisé en ce que** le dispositif de fixation présente un dispositif d'encliquetage et/ou de serrage (43), au moyen duquel l'élément de repose-paume (13) peut être encliqueté et/ou serré, notamment avec la console (8) du côté du véhicule, de telle sorte qu'un mouvement relatif entre l'élément de repose-paume (13) et la console (1) soit bloqué.

9. Agencement selon la revendication 8, **caractérisé en ce que** le dispositif d'encliquetage et/ou de serrage (43) est réalisé de telle sorte que la connexion par encliquetage entre l'élément de repose-paume (13) et la console (1) puisse être libérée par un actionnement par pression et/ou traction de l'élément de repose-paume (13) orienté notamment dans la direction de déplacement de l'élément de repose-paume (13).

10. Agencement selon l'une quelconque des revendications précédentes, **caractérisé en ce que** l'élément de commande (29, 31) est disposé au niveau de l'élément de repose-paume (1) de telle sorte qu'il puisse être actionné à la fois dans la position d'utilisation et dans la position de rangement de l'élément de repose-paume (13).

11. Agencement selon l'une quelconque des revendications précédentes, **caractérisé en ce que**, vu dans la direction verticale du véhicule (z), une paroi extérieure supérieure (25) et/ou au moins une paroi extérieure latérale (15), notamment tournée vers le conducteur du véhicule, en particulier au moins un côté frontal, de l'élément de repose-paume (13), constitue une surface de repose-paume (23).

12. Agencement selon l'une quelconque des revendications précédentes, **caractérisé en ce qu'**au moins une arête (27) d'une surface de repose-paume (23) de l'élément de repose-paume (13) est réalisé sous forme arrondie et/ou **en ce qu'**une surface de repose-paume (23) de l'élément de repose-paume (13) est réalisée sous forme rembourrée.

13. Agencement selon l'une quelconque des revendications précédentes, **caractérisé en ce que** l'élément de repose-paume (13) est réalisé sous forme de plaque et/ou sous forme parallélépipédique et/ou, en particulier vu dans la direction transversale du véhicule (y), sous forme allongée.

14. Véhicule, en particulier véhicule utilitaire, comprenant un agencement selon l'une quelconque des revendications 1 à 13.
